# EUROPÄISCHE PATENTANMELDUNG

(11) **EP 1 760 294 A1**
(43) Veröffentlichungstag der Anmeldung: **07.03.2007**
(21) Anmeldenummer: 05018865.5
(22) Anmeldetag: 31.08.2005
(51) Int. Cl.: F02C 9/28, F02C 9/00

(54) **Verfahren und Vorrichtung zur Erhöhung der Betriebsflexibilität einer stromerzeugenden Anlage, insbesondere einer Gas- oder Dampfturbine**

(71) Anmelder: SIEMENS AKTIENGESELLSCHAFT, 80333 München (DE)
(72) Erfinder: Ebner, Günther, 91466 Gerhardshofen (DE); Herzog, Tobias, 91083 Baiersdorf (DE)

(57) **Zusammenfassung**

Die Erfindung betrifft ein Verfahren zur Erhöhung der Betriebsflexibilität einer stromerzeugenden Anlage mit Turbosatz (30) umfassend eine Turbine und einen an die Turbine angekoppelten, elektrischen Generator, wobei ein Leistungssollwert (P1) vorgegeben wird, und wobei ein zukünftiger Zielzeitpunkt (t₁) vorgegeben wird, bei dem der Turbosatz (30) den Leistungssollwert (P₁) aufweisen soll, so dass mittels des Leistungssollwert (P₁) und des Zielzeitpunkts (t₁) eine Leistungskurve (22) ermittelt wird, wobei der Turbosatz (30) ausgehend von einer Ist-Leistung (P₀) zu einer Ist-Zeit (t0) entlang der Leistungskurve (22) derart gefahren wird, so dass der vorgegeben Leistungssollwert (P₁) zum vorgegeben Zielzeitpunkt (t₁) erreicht wird. Die Erfindung betrifft eine Vorrichtung zur Erhöhung der Betriebsflexibilität einer stromerzeugenden Anlage mit Turbosatz (30) umfassend eine Turbine und einen an die Turbine angekoppelten, elektrischen Generator, mit einer Eingabeeinheit (12) für einen Leistungssollwert (P₁), einer Eingabeeinheit (14) für einen Zielzeitpunkt (t₁), sowie einer Ausleseinheit (10) für eine Ist-Leistung (P₀) und eine Ausleseinheit (16) für eine Ist-Zeit (t₀), wobei die Ausleseeinheiten und die Eingabeeinheiten mit einer Berechnungseinheit (18) zur Berechnung einer Leistungskurve (22) verbunden sind. Die Erfindung betrifft weiterhin eine Gasturbine sowie eine Dampfturbine mit einem Verfahren und einer Vorrichtung gemäß der Erfindung.

## Beschreibung

Die Erfindung betrifft ein Verfahren zur Erhöhung der Betriebsflexibilität einer stromerzeugenden Anlage mit Turbosatz umfassend eine Turbine und einen an die Turbine angekoppelten, elektrischen Generator. Die Erfindung betrifft weiterhin eine Vorrichtung die insbesondere die Durchführung des Verfahrens erlaubt. Weiterhin betrifft die Erfindung eine Gas- und eine Dampfturbine.

Der Strommarkt wird neben der Regelenergie besonders durch verbraucherbedingte Spitzenlasten beeinflusst. Diese sind teilweise oft unvorhersehbar. Saisonbedingte, vorhersehbare Schwankungen, wie z.B. bestimmte Feiertage und Großabnehmer, wie die Industrie, stellen hier häufig einen Ausnahmefall dar, da oftmals bekannt ist, wann stromverbrauchende Maschinen an oder abgefahren werden. Um dennoch einen flächendeckenden Stromverbrauch zu sichern, werden stromerzeugende Anlagen, wie Gas- und Dampfkraftwerke, von den Großabnehmern über die benötigte Strommenge zu einem gewünschten Zielzeitpunkt informiert. Damit zum vertraglichen Zielzeitpunkt die Gas- oder Dampfkraftwerke die gewünschte Leistung abgibt, müssen der Turbosatz der Kraftwerke vom Bedienpersonal frühzeitig gestartet. Die gewünschte Leistung wird daher zumeinst viel zu früh erreicht. Dadurch entstehen dem Kraftwerksbetreiber unnötige Kosten durch zu frühes Anfahren, welche von Großabnehmer wie der Industrie und Kleinabnehmer wie den einzelnen Haushalten getragen werden müssen. Dies ist gerade in einem liberalisierten Strommarkt von Nachteil.

Aufgabe der Erfindung ist daher die Angabe eines Verfahrens zur Erhöhung der Betriebsflexibilität einer stromerzeugenden Anlage mit Turbosatz. Eine weitere Aufgabe ist die Angabe einer Vorrichtung welche insbesondere eine Durchführung des Verfahrens erlaubt. Das Verfahren als auch die Vorrichtung sollen sowohl in einer Dampf- als auch in einer Gasturbine einsetzbar sein.

Diese auf das Verfahren bezogene Aufgabe wird erfindungsgemäß gelöst durch die Angabe eines Verfahrens zur Erhöhung der Betriebsflexibilität einer stromerzeugenden Anlage mit Turbosatz umfassend eine Turbine und einen an die Turbine angekoppelten, elektrischen Generator, wobei ein Leistungssollwert vorgegeben wird und ein zukünftiger Zielzeitpunkt vorgegeben wird, bei dem der Turbosatz den Leistungssollwert aufweisen soll, so dass mittels des Leistungssollwert und des Zielzeitpunkts eine Leistungskurve ermittelt wird, wobei der Turbosatz ausgehend von einer Ist-Leistung zu einer Ist-Zeit entlang der Leistungskurve derart gefahren wird, so dass der vorgegeben Leistungssollwert zum vorgegeben Zielzeitpunkt erreicht wird.

Die Erfindung geht von der Erkenntnis aus dass der zu früh erreichte Leistungssollwert und die damit verbundenen Betriebskosten aufgrund der manuellen Handhabung des Systems beruhen. Der Turbosatz wird aufgrund dieser manuellen Handhabung zu früh oder aber auch mit der falschen Beschleunigung hochgefahren. Die Erfindung geht von dem Ansatz aus dass sowohl der Leistungssollwert als auch der zukünftige Zielzeitpunkt vorgegeben wird, bei dem der Turbosatz den Leistungssollwert aufweisen soll. Dies kann jederzeit über beispielsweise ein Bedienpult vom Bedienpersonal eingegeben werden. Weiterhin sind durch die Betriebsdaten auch die Ist-Leistung und der Ist-Zeitpunkt bekannt. Mittels diesen Werten wird nun eine Leistungskurve ermittelt. Diese Leistungskurve beinhalten einen Startpunkt, zu welchem der Turbosatz beginnt hochgefahren oder bei Erniedrigung der Leistung zu einem gewissen Zielzeitpunkt, auch runtergefahren wird. Weiterhin beinhaltet diese Leistungskurve auch die Beschleunigung, mit der der Turbosatz ausgehend vom Ist-Zeitwert bis zum Zielzeitwert hoch- bzw. runtergefahren wird. Der Turbosatz wird also ausgehend von der Ist-Leistung zu der Ist-Zeit entlang der Leistungskurve derart gefahren dass der vorgegeben Leistungssollwert zum vorgegeben Zielzeitpunkt erreicht wird. Dies bewirkt eine Einsparung von Nutzenergie da die Leistung im Wesentlichen punktgenau bereitsteht. Das frühzeitige Erreichen des Leistungssollwerts durch das manuelle hoch- und runterfahren wird vermieden. Dies spart Kosten. Weiterhin ist ein genaueres Lastprofil erstellbar. Durch ein genaueres Lastprofil kann der Stromverbrauch besser gemessen werden und auf die Groß- und Kleinkunden umgerechnet werden was wiederum die Kleinkunden entlastet. Ein weiterer Vorteil ist die Bedienfreundlichkeit, durch die Entlastung des Bedienpersonals.

In bevorzugter Ausgestaltung wird die Leistungskurve so gewählt, dass diese lebensdauerverlängert auf den Generator und die Turbine wirkt. Dadurch können weiterhin Instandhaltungskosten und Wartungskosten gesenkt werden.

Bevorzugt erfolgt die Berechnung der Leistungskurve automatisch. Ein vollautomatisches System entlastet das Bedienpersonal zusätzlich. Zudem werden Bedienfehler vermieden.

In weiterer bevorzugter Ausgestaltung wird die Leistungskurve unter Berücksichtigung der minimalen und maximalen Leistungskurve berechnet. Somit werden Schäden an dem Turbosatz beim hoch bzw. runterfahren vermieden.

Bevorzugt wird bei einem Turbosatz, welcher in einer Gastturbine vorgesehen ist, die Leistungskurve so gewählt, dass die NOx-Emissionen möglichst gering gehalten werden. Dies hängt vom Wirkungsgrad des Turbosatzes ab. Unnötige Emissionen durch unsachgemäßes hoch bzw. runterfahren werden vermieden.

Diese auf das Vorrichtung bezogene Aufgabe wird erfindungsgemäß gelöst durch die Angabe einer Vorrichtung zur Erhöhung der Betriebsflexibilität einer stromerzeugenden Anlage mit Turbosatz umfassend eine Turbine und einen an die Turbine angekoppelten, elektrischen Generator, mit einer Eingabeeinheit für einen Leistungssollwert, einer Eingabeeinheit für einen Zielzeitpunkt, sowie einer Ausleseinheit für eine Ist-Leistung und eine Ausleseinheit für eine Ist-Zeit, wobei die Ausleseeinheiten und die Eingabeeinheiten mit einer Berechnungseinheit zur Berechnung einer Leistungskurve verbunden sind. Die Vorrichtung ist insbesondere dafür geeignet dass oben beschriebene Verfahren durchzuführen. Die Vorteile des Verfahrens ergeben sich daher auch für die Vorrichtung.

Weitere Merkmale, Eigenschaften und Vorteile der Erfindung ergeben sich aus der Beschreibung eines Ausführungsbeispiels und aus den weiteren abhängigen Ansprüchen.

Im Folgenden wird die Erfindung beispielhaft anhand einer Zeichnung näher erläutert.

Darin zeigt in vereinfachter und nicht maßstäblicher Darstellung:
- FIG 1: Die Beschreibung des Verfahrens anhand der Leistungskurven,
- FIG 2: Beschreibung der Vorrichtung.

Gleiche Teile sind in allen Figuren mit denselben Bezugszeichen versehen.

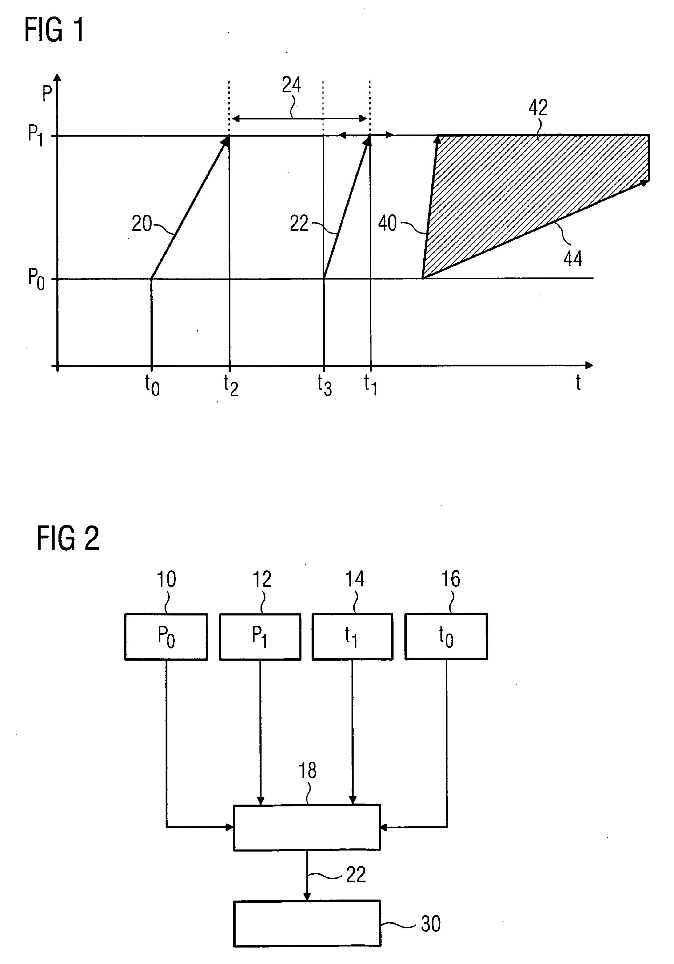

FIG 1 zeigt die Kurve 20 des Stands der Technik anhand deren der Turbosatz 30 umfassend einer Generators und einer Turbine manuell vom Bedienpersonal hochgefahren wird. Die Kurve ist gegenüber der Zeit t und der Leistung P aufgetragen. Der Einfachheit und übersichtlicheren Darstellung wegen, werden in der FIG 1 lediglich lineare Leistungskurven dargestellt. Die Ist-Zeit ist dabei durch die Zeit t₀, die Ist-Leistung durch die Leistung P₀ gekennzeichnet. Zu einem Zielzeitpunkt t₁ soll eine Leistungssollwert P₁ bereitstehen. Das manuelle hochfahren des Turbosatzes wird durch die Kurve 20 gekennzeichnet. Diese wird so gestartet dass der Leistungssollwert P₁ am Zielzeitpunkt t₁ bereitsteht. Durch das frühe hochfahren des Turbosatzes liegt der Leistungssollwert P₁ jedoch bereits an einem Zeitpunkt t₂ vor. Innerhalb der Zeitdauer 24, welche die Differenz zwischen dem Zeitpunkt t₂ und dem Zielzeitpunkt t₁ darstellt, wird daher ein unerwünschter Leistungssollwert P₁ gefahren, wodurch sich hohen Kosten ergeben. Im Gegensatz dazu wird in der Erfindung der Turbosatz 30 erst zu einem späteren Zeitpunkt, dem Zeitpunkt t₃ gestartet. Somit wird eine unnötige Zeitperiode 24 bei einem zu hohen Leistungssollwert P₁ vermieden. Der Turbosatz 30 wird anhand einer automatisch berechneten Leistungskurve 22 hochgefahren. Diese Leistungskurve 22 wird dergestalt gewählt dass der Turbosatz 30 keinen Schaden erleidet, das heißt dass diese Leistungskurve 22 lebenserhaltend wirkt. Bei einer Gasturbine wird die Leistungskurve 22 dergestalt gewählt, dass dies sich positiv auf den NOx-Emissionen auswirkt. Die Leistungskurve 22 wird dergestalt gewählt dass sie innerhalb der zulässigen Leistungskurven, anhand derer der Turbosatz 30 hoch bzw. runtergefahren werden kann, liegen. Dieser zulässige Bereich 42 ist durch die maximale Leistungskurve 40 und die minimale Leistungskurven 44 dargestellt.

FIG 2 zeigt schematisch eine Vorrichtung zur Erhöhung der Betriebsflexibilität einer stromerzeugenden Anlage mit Turbosatz, welche insbesondere eine Durchführung des Verfahrens erlaubt. Diese umfasst eine Eingabeeinheit 12 für den Leistungssollwert und eine Eingabeeinheit 14 für den Zielzeitpunkt. Weiterhin umfasst die Vorrichtung eine Ausleseeinheit für die Ist-Leistung 10 und eine Ausleseeinheit 16 für die Ist-Zeit. Die Ausleseeinheiten 10,16 sowie die Eingabeeinheiten 12,14 sind zum Datenaustausch mit einer Berechnungseinheit 18 verbunden. In der Berechnungseinheit 18 wird mittels dieser Daten sowie der Betriebsdaten, welche beispielsweise die minimale Leistungskurve 44 und die maximale Leistungskurve 40 beinhaltet, automatisch die Leistungskurve 22 berechnet. Die Leistungskurve 22 wird dergestalt von der Berechnungseinheit 18 berechnet dass sich dies dem Turbosatz 30 nicht schädigt, das heißt lebensdauerverlängernd wirkt. Die so berechnete Leistungskurve 22 wird an den Turbosatz 30 für das automatische Hoch bzw. Runterfahren geleitet.

## Patentansprüche

1. Verfahren zur Erhöhung der Betriebsflexibilität einer stromerzeugenden Anlage mit Turbosatz (30) umfassend eine Turbine und einen an die Turbine angekoppelten, elektrischen Generator, **dadurch gekennzeichnet,**
- **dass** ein Leistungssollwert (P₁) vorgegeben wird,
- **dass** ein zukünftiger Zielzeitpunkt (t₁) vorgegeben wird, bei dem der Turbosatz (30) den Leistungssollwert (P₁) aufweisen soll,
- **dass** mittels des Leistungssollwert (P₁) und des Zielzeitpunkts (t₁) eine Leistungskurve (22) ermittelt wird,
- und **dass** der Turbosatz (30) ausgehend von einer Ist-Leistung (P₀) zu einer Ist-Zeit (t₀) entlang der Leistungskurve (22) derart gefahren wird,
- so dass der vorgegeben Leistungssollwert (P₁) zum vorgegeben Zielzeitpunkt (t₁) erreicht wird.

2. Verfahren nach Anspruch 1,
**dadurch gekennzeichnet, dass** die Leistungskurve (22) so gewählt wird, dass diese lebensdauerverlängernd auf den Generator und die Turbine wirkt.

3. Verfahren nach einem der vorhergehenden Ansprüche,
**dadurch gekennzeichnet, dass** die Berechnung der Leistungskurve (22) automatisch, insbesondere computergestützt, erfolgt.

4. Verfahren nach einem der vorhergehenden Ansprüche,
**dadurch gekennzeichnet, dass** die Leistungskurve (22) unter Berücksichtigung einer maximalen Leistungskurve (40), die durch einen maximal zulässigen Leistungsgradienten charakterisiert ist, und einer minimale Leistungskurve (44), die durch einen minimalen Leistungsgradienten charakterisiert ist, berechnet wird.

5. Verfahren nach einer der vorhergehenden Ansprüche,
**dadurch gekennzeichnet, dass** dieses bei einem Turbosatz (30) einer Dampfturbine angewendet wird.

6. Verfahren nach einer der vorhergehenden Ansprüche,
**dadurch gekennzeichnet, dass** dieses bei einem Turbosatz (30) einer Gasturbine angewendet wird.

7. Verfahren nach Anspruch 6,
**dadurch gekennzeichnet, dass** die Leistungskurve (22) so gewählt wird, dass die NOx-Emissionen der Gasturbine möglichst gering gehalten werden.

8. Vorrichtung zur Erhöhung der Betriebsflexibilität einer stromerzeugenden Anlage mit Turbosatz (30) umfassend eine Turbine und einen an die Turbine angekoppelten, elektrischen Generator, mit einer Eingabeeinheit (12) für einen Leistungssollwert (P₁), einer Eingabeeinheit (14) für einen Zielzeitpunkt (t₁), sowie einer Ausleseinheit (10) für einen Ist-Leistung (P₀) und eine Ausleseinheit (16) für eine Ist-Zeit (t₀), wobei die Ausleseeinheiten (10,16) und die Eingabeeinheiten (12,14) mit einer Berechnungseinheit (18) zur Berechnung einer Leistungskurve (22) verbunden sind.

9. Vorrichtung nach Anspruch 8,
**dadurch gekennzeichnet, dass** in der Berechnungseinheit (18) die Betriebsdaten in einem Kennfeld hinterlegt sind.

10. Vorrichtung nach Anspruch 9,
**dadurch gekennzeichnet, dass** die Berechnungseinheit (18) zum automatischen Berechnen der Leistungskurve (22) unter Berücksichtigung der Betriebsdaten ausgelegt ist.

11. Turbosatz (30) mit einer Gasturbine und mit einer Vorrichtung nach einem der Ansprüche 8 bis 10.

12. Turbosatz (30) mit einer Dampfturbine und mit einer Vorrichtung nach einem der Ansprüche 8 bis 10.

13. Kraftwerksanlage mit mindestens einem Turbosatz (30) nach einem der Ansprüche 11 bis 12.
